# FASCICULE DE BREVET EUROPEEN

(11) **EP 4 127 911 B1**
(45) Date de publication et mention de la délivrance du brevet: **24.09.2025**
(21) Numéro de dépôt: 21712507.9
(22) Date de dépôt: 18.03.2021
(51) Int. Cl.: G06F 8/65

(54) **DISPOSITIFS ET PROCÉDÉ DE CONTRÔLE D'UNITÉS DE COMMANDE ÉLECTRONIQUES D'UN VÉHICULE AUTOMOBILE**
VORRICHTUNGEN UND VERFAHREN ZUR VERWALTUNG VON ELEKTRONISCHEN STEUERGERÄTEN EINES KRAFTFAHRZEUGS
DEVICES AND METHOD FOR MANAGING ELECTRONIC CONTROL UNITS OF A MOTOR VEHICLE

(30) Priorité: 30.03.2020 FR 2003114
(43) Date de publication de la demande: 08.02.2023
(73) Titulaire: Ampere SAS, 92100 Boulogne-Billancourt (FR)
(72) Inventeur: AFANTENOS, Marie-Cecile, 31860 labarthe sur leze (FR); BENAVOLI, Patrick, 31200 Toulouse (FR); MENIER, Pascal, 31800 St Gaudens (FR)
(74) Mandataire: Renault Group
(86) Numéro de dépôt international: PCT/EP2021/056975
(87) Numéro de publication internationale: WO 2021/197864

(56) Documents cités:
- US-A1- 2003 163 664
- US-A1- 2015 217 780

## Description

### Domaine technique

L'invention concerne de manière générale l'électronique embarquée automobile et en particulier un dispositif et un procédé de contrôle d'unités de commande électroniques de véhicules automobiles.

### Art antérieur

Les véhicules modernes utilisent de nombreuses unités de commande électroniques (aussi appelées 'unités de contrôle électroniques' ou UCE et 'calculateurs embarqués') pour contrôler le fonctionnement de composants tels que les moteurs, les groupes motopropulseurs, les transmissions, les freins, les suspensions, les systèmes de divertissement embarqués, les systèmes de communication, les systèmes de carrosserie, les systèmes de châssis, etc.

Une unité de contrôle électronique désigne un calculateur embarqué ou système embarqué configuré pour contrôler électroniquement une fonction ou un dispositif physique de véhicules. Chaque UCE envoie des signaux de commande au dispositif correspondant pour le contrôler et stocke les données concernant le dispositif qu'elle contrôle. Les données stockées dans les UCE permettent notamment de diagnostiquer la cause des dysfonctionnements du véhicule.

Le diagnostic des unités de commande électroniques est généralement effectué par un outil de diagnostic (aussi appelé 'testeur') connecté aux unités de commande électronique via une connexion filaire ou sans fil, par laquelle les unités de commande électroniques et l'outil de diagnostic échangent des données.

Les unités de contrôle électroniques sont initialisées par le constructeur automobile lors de la fabrication à l'usine. Une fois qu'une unité de contrôle électronique a été initialement programmée sur un véhicule, il peut s'avérer nécessaire de modifier ou de changer certaines parties du code de programmation initial, par exemple pour changer des valeurs de paramètres de configuration, ajouter des données, apporter des corrections aux fichiers d'application, etc. Ainsi, les systèmes de diagnostic ont été développés pour que les équipes de développement des produits, les équipes de test des logiciels/matériels et les équipes d'après-vente puissent détecter et réparer les défauts ou améliorer les réglages d'un véhicule en connectant leurs outils de diagnostic aux unités de contrôle électroniques.

Les données de configuration alors stockées dans les mémoires des unités de contrôles électroniques peuvent être mises à jour au cours du cycle de vie du véhicule.

La communication (sans fil ou filaire) entre un outil de diagnostic (distant ou embarqué) et une unité de contrôle électronique est établie selon un protocole automobile qui permet de diagnostiquer les erreurs et de reprogrammer les unités de contrôle électroniques.

Le protocole UDS (acronyme de 'Unified Diagnostic Services' en langage anglo-saxon) est un protocole automobile de services de diagnostic unifié international. Il permet d'interroger, par un serveur de diagnostic, les différentes unités de contrôle électroniques pour que celles-ci remontent des informations sur les dysfonctionnements ou évènements particuliers ayant lieu au cours du fonctionnement du véhicule.

La mise à jour des unités de contrôle électroniques peut être réalisée par le constructeur automobile ou par un coordinateur technique et peut se faire à distance via un serveur de diagnostic distant ou via un serveur de diagnostic embarqué en utilisant une prise de diagnostic.

Des techniques de gestion et de contrôle des mises à jour des unités de contrôle électroniques d'un véhicule automobile existent.

Une première technique de mise à jour automatique des unités de commande électronique d'un véhicule automobile est décrite dans le brevet américain n° US 10416989 B2. Cette technique permet de fournir automatiquement, à travers les airs ou via un serveur de diagnostic embarqué, des mises à jour logicielles à un calculateur embarqué d'un véhicule automobile. D'abord, la nécessité d'effectuer des mises à jour logicielles pour un calculateur embarqué est identifiée. Ensuite, pour les calculateurs embarqués nécessitant une mise à jour logicielle, un fichier de configuration est envoyé depuis un serveur (distant ou embarqué) pour effectuer les mises à jour requises. Les paramètres de mise à jour sont stockés dans des fichiers temporaires qui sont au préalable enregistrés dans la mémoire du calculateur embarqué, puis exécutés et enfin supprimés après la reprogrammation.

Une seconde technique de reprogrammation d'unités de contrôle électroniques d'un véhicule automobile a été adressée dans la demande de brevet américain n° US 20140058532 A1. Cette seconde technique permet de programmer et de configurer une unité de contrôle électronique en utilisant une méthode de flashage partiel permettant de sectionner la mémoire de l'unité de contrôle électronique en plusieurs compartiments en fonction des types de fichiers numériques existants et de ne reconfigurer que les compartiments qui doivent être reprogrammés. La méthode de reprogrammation selon la demande de brevet n° US 20140058532 A1 permet, dans un premier temps, de délimiter une mémoire dans l'unité de contrôle électronique stockant différents types de contenu ayant chacun des lignes de code. Ensuite, elle permet d'établir une segmentation de la mémoire en la divisant en différentes sections, chaque section étant caractérisée par la nature des fichiers qu'elle contient (le code de l'application, le code du système d'exploitation, les fichiers de calibrations, etc.) et pouvant comprendre des espaces de mémoire vides dans lesquels il est possible d'écrire du code supplémentaire. Ainsi, si une reprogrammation est envisagée pour un type de fichier en particulier, la section de mémoire caractérisée par ce même type de fichier est considérée et l'espace vide de cette section est utilisé pour faire la reprogrammation sans affecter d'autres contenus de mémoire.

Une troisième technique de mise à jour à distance des unités de contrôle électroniques arrangées dans un véhicule est décrite dans la demande de brevet américain n° US10101992 B2. Cette technique permet de reprogrammer les microcontrôleurs automobiles en utilisant un réseau de communication sans fil à travers les airs avec la possibilité de distinguer entre les différents types de calculateurs. La communication sans fil avec un réseau distant permet d'assurer l'échange de données entre les microcontrôleurs automobiles et le serveur afin d'obtenir un ensemble de mises à jour différentielles. L'ensemble des paquets de mise à jour est enregistré dans une mémoire de stockage au niveau de l'unité télématique. Les données de mise à jour sont ensuite gérées par le processeur de l'unité télématique, puis conduites via le réseau de contrôleurs du véhicule, vers une unité de contrôle électronique cible-où-elles seront par la suite installées.

Les techniques existantes de mise à jour des unités de contrôle électroniques permettent de réaliser la reprogrammation des unités de contrôle électroniques aussi bien par le constructeur automobile que par les coordinateurs techniques.

Pour des raisons stratégiques, architecturales, ou contractuelles, les mises à jour des unités de contrôle électroniques opérées par le coordinateur technique ne sont pas toujours communiquées au constructeur automobile.

Par exemple, le coordinateur technique peut effectuer une mise à jour des données de configuration d'une unité de contrôle électronique et ne pas la communiquer au constructeur automobile qui ne souhaite pas faire évoluer la liste des critères dans la base véhicule monde car cette liste est considérée comme partie intégrante de l'identité du véhicule.

Le coordinateur technique peut en outre ne pas communiquer au constructeur automobile une mise à jour d'une option pour consolider l'état de l'option dans le véhicule et non dans le serveur du constructeur automobile.

Le coordinateur technique peut également être engagé contractuellement à garantir la disponibilité de l'option lors de la sortie du véhicule du garage et ne peut se permettre de l'assujettir à une connexion et une communication fiables avec les serveurs du constructeur.

Selon les techniques existantes, si une mise à jour des données de configuration opérée par le constructeur automobile intervient après une ou plusieurs mises à jour opérées par le coordinateur technique, les données mises à jour par le coordinateur technique sont perdues. Les techniques existantes ne permettent pas une distinction entre un paramétrage des unités de contrôle électronique réalisé en réponse à une commande de mise à jour reçue du constructeur automobile et un paramétrage réalisé en réponse à une commande de mise à jour reçue d'un tiers (par exemple un coordinateur technique).

Il existe donc un besoin de protéger les paramètres modifiés en réponse à une commande de mise à jour émise par le coordinateur technique contre leur altération lors d'une mise à jour réalisée à l'initiative du constructeur automobile, sans nécessiter le déploiement de nouvelles infrastructures ou autres outils.

Les documents US2003/163664 intitulé « Method and apparatus for updating a distributed program » et US2015/217780 intitulé « Method and Apparatus for Persistent Transferrable Customizable Vehicle Settings"sont connus de l'art antérieur.

### Définition générale de l'invention

L'invention vient améliorer la situation. A cet effet, l'invention est exposée dans le jeu de revendications joint.

Avantageusement, les modes de réalisation de l'invention offrent un mécanisme de protection des paramètres modifiés en réponse à une commande de mise à jour à l'initiative du coordinateur technique contre leur altération lors d'une mise à jour effectuée en réponse à une commande de mise à jour à l'initiative du constructeur automobile.

Avantageusement, les modes de réalisation de l'invention permettent de distinguer le paramétrage de la configuration des unités de contrôle électroniques effectué à l'initiative du constructeur automobile du paramétrage effectué à l'initiative du coordinateur technique.

Avantageusement, les modes de réalisation de l'invention offrent des moyens de protection de la configuration personnalisée effectuée par le coordinateur technique avant une mise à jour logicielle effectuée par le constructeur automobile.

Avantageusement, les modes de réalisation de l'invention offrent deux interfaces de mise à jour programmables dédiées, une première interface de mise à jour étant accessible par le coordinateur technique et une seconde interface de mise à jour programmable étant dédiée au constructeur automobile. Les deux interfaces de mise à jour programmables offrent un moyen de protection programmable permettant de protéger une version antérieure de configuration installée par le coordinateur technique.

Avantageusement, les modes de réalisation de l'invention permettent, à travers la première interface de mise à jour programmable accessible par le coordinateur technique, de lire l'état du bouclier de configuration, d'ajouter une référence à au moins un paramètre de configuration donné, de supprimer une référence à au moins un paramètre de configuration donné, et de supprimer toute référence à des paramètres de configuration.

Avantageusement, les modes de réalisation de l'invention fournissent une protection programmable des données via l'interface de diagnostic.

### Brève description des dessins

D'autres caractéristiques, détails et avantages de l'invention ressortiront à la lecture de la description faite en référence aux dessins annexés donnés à titre d'exemple et qui représentent, respectivement :
[Fig.1] La figure 1 est une vue schématique illustrant un véhicule automobile équipé d'une unité de commande électronique.
[Fig.2] La figure 2 est un schéma représentant un exemple de structure en blocs d'un dispositif de contrôle d'une unité de commande électronique, selon certains modes de réalisation de l'invention.
[Fig.3] La figure 3 est un logigramme représentant un procédé de contrôle d'une unité de commande électronique, selon certains modes de réalisation de l'invention.
[Fig.4] La figure 4 est un schéma représentant un exemple de la structure d'un ensemble de paramètres de configuration et du bouclier de configuration, selon certains modes de réalisation de l'invention.
[Fig.5] La figure 5 représente un exemple de diagramme de séquence illustrant l'initialisation d'un ensemble de paramètres de configuration, selon certains modes de réalisation de l'invention.
[Fig.6] La figure 6 est un schéma représentant un exemple de la structure d'un ensemble de paramètres de configuration et du bouclier de configuration après une étape d'initialisation, selon certains modes de réalisation de l'invention.
[Fig.7] La figure 7 représente un exemple de diagramme de séquence illustrant la mise à jour de la configuration d'une unité de contrôle électronique à l'initiative du coordinateur technique, selon certains modes de réalisation.
[Fig.8] La figure 8 est un schéma représentant un exemple de la structure d'un ensemble de paramètres de configuration et du bouclier de configuration après une mise à jour effectuée à l'initiative du coordinateur technique, selon certains modes de réalisation.
[Fig.9] La figure 9 représente un exemple de diagramme de séquence illustrant la mise à jour de la configuration d'une unité de contrôle électronique à l'initiative du constructeur automobile suivant une mise à jour opérée à l'initiative du coordinateur technique, selon certains modes de réalisation.
[Fig.10] La figure 10 est un schéma représentant un exemple de la structure d'un ensemble de paramètres de configuration et du bouclier de configuration après une mise à jour effectuée à l'initiative du constructeur automobile suivant une mise à jour opérée à l'initiative du coordinateur technique.

### Description détaillée

Les modes de réalisation de l'invention fournissent un dispositif et un procédé de contrôle d'une unité de commande électronique d'un véhicule automobile. Le dispositif et le procédé selon l'invention offrent une protection des données de configuration d'une unité de commande électronique contre une altération lors d'une mise à jour effectuée par le constructeur automobile suite à une mise à jour opérée par le coordinateur technique. La protection des données selon l'invention se base sur la mise en œuvre d'un bouclier de configuration implémenté à travers deux interfaces de mises à jour programmables dédiées.

Tel qu'utilisé ici, un constructeur automobile fait référence au fabricant du véhicule automobile dont une unité de commande électronique est contrôlée par le dispositif et le procédé selon l'invention.

Tel qu'utilisé ici, un coordinateur technique fait référence à un tiers différent du constructeur automobile doté de compétences en maintenance et gestion des pannes des unités de contrôle électroniques et apte à installer des mises à jour d'unités de commande électronique d'un véhicule automobile. A titre d'exemple non limitatif, un coordinateur technique peut être un fabricant de composant (par exemple un développeur d'unités de commandes électroniques ou un fabricant dont les produits utilisent des unités de commande électroniques) apte à installer des mises à jour logicielles pour les unités de commande électronique produites ou entretenues par ce fabricant de composants. Dans un autre exemple, le coordinateur technique peut être un fournisseur de services (par exemple un concessionnaire, un mécanicien, un électromécanicien, ou un centre de services) apte à mettre à jour les unités de commandes électroniques installées dans les véhicules automobiles qui sont entretenus chez le fournisseur de services.

Telles qu'utilisées ici, une première interface de mise à jour est accessible par une première source telle que les coordinateurs techniques, et une deuxième interface de mise à jour est accessible par une deuxième source, telle que le constructeur automobile.

Tel qu'utilisé ici, un paramétrage automatique désigne un paramétrage de la configuration d'une unité de commande électronique qui est opéré par le constructeur automobile.

Tel qu'utilisé ici, un paramétrage manuel désigne un paramétrage de la configuration d'une unité de commande électronique qui est opéré par un coordinateur technique.

Tel qu'utilisé ici, un paramètre de configuration 'automatique' ou dit 'à l'état automatique' désigne un paramètre de configuration dont la valeur de paramètre a été mise à jour en réponse à une commande émise par le constructeur automobile (par exemple en réponse à une commande d'initialisation émise à la phase d'initialisation lors de la fabrication à l'usine ou en réponse à une commande de mise à jour émise pendant le cycle de vie du véhicule en service après-vente).

Tel qu'utilisé ici, un paramètre de configuration 'manuel' ou dit 'à l'état manuel' désigne un paramètre de configuration dont la valeur de paramètre a été mise à jour en réponse à une commande de mise à jour émise par le coordinateur technique.

Telle qu'utilisée ici, une opération de transformation de paramètre désigne une commande émise par le constructeur automobile ou par un coordinateur technique pour changer le caractère manuel ou automatique d'un paramètre de configuration.

Tel qu'utilisé ici, un bouclier de paramètre (aussi appelé 'filtre de paramètre' ou 'référence') désigne un filtre logiciel représentant une valeur numérique enregistrée dans l'unité de commande électronique et utilisée pour protéger un paramètre manuel lors d'une mise à jour de la configuration de l'unité de commande électronique opérée à l'initiative du constructeur automobile. Le bouclier de paramètre désigne donc un filtre logiciel utilisé pour protéger ledit paramètre lors de la mise à jour de ladite valeur de paramètre en réponse à une commande de mise à jour reçue d' une deuxième source. Le bouclier de configuration comprend donc les paramètres de configuration, ici appelés 'manuel', qui seront protégés des mises à jour ultérieures en réponse à une commande de mise à jour reçue d' une deuxième source. Le filtre ne nécessite pas la dimension n du paramètre et permet de s'affranchir de ses éventuelles évolutions. Il n'est donc pas utile de connaître à l'avance les paramètres de configurations qui seront concernés ni leur adresse mémoire.

Tel qu'utilisé ici, l'ajout d'un bouclier de paramètre consiste à ajouter au bouclier de configuration une référence à un paramètre de configuration donné.

Tel qu'utilisé ici, la suppression d'un bouclier de paramètre consiste à retirer du bouclier de configuration une référence à un paramètre de configuration donné.

Tel qu'utilisé ici, un bouclier de configuration désigne un ensemble de filtres de paramètres représentant des valeurs numériques enregistrées dans l'unité de commande électronique et utilisées par l'unité de commande électronique pour protéger les paramètres manuels lors d'une mise à jour de la configuration de l'unité de commande électronique opérée à l'initiative du constructeur automobile. Le bouclier de configuration peut porter sur une partie ou l'ensemble de paramètres de configuration de l'unité de commande électronique. Le bouclier de configuration contient une référence vers chaque paramètre manuel. Le bouclier de configuration peut se construire d'une manière incrémentale durant le cycle de vie du véhicule à travers des mises à jour locales des paramètres de configuration qui permettent de rajouter ou de supprimer des boucliers de paramètres de façon individuelle suite à une mise à jour opérée par le coordinateur technique. Le bouclier de configuration représente un mécanisme de protection qui permet de protéger les paramètres de configuration contre une altération ultérieure suite à une mise à jour opérée par le constructeur automobile.

Telle qu'utilisée ici, une communication à travers les airs désigne une communication sans fil entre une unité de contrôle électronique et un ou plusieurs serveurs distants accessibles par le constructeur automobile et sous sa responsabilité.

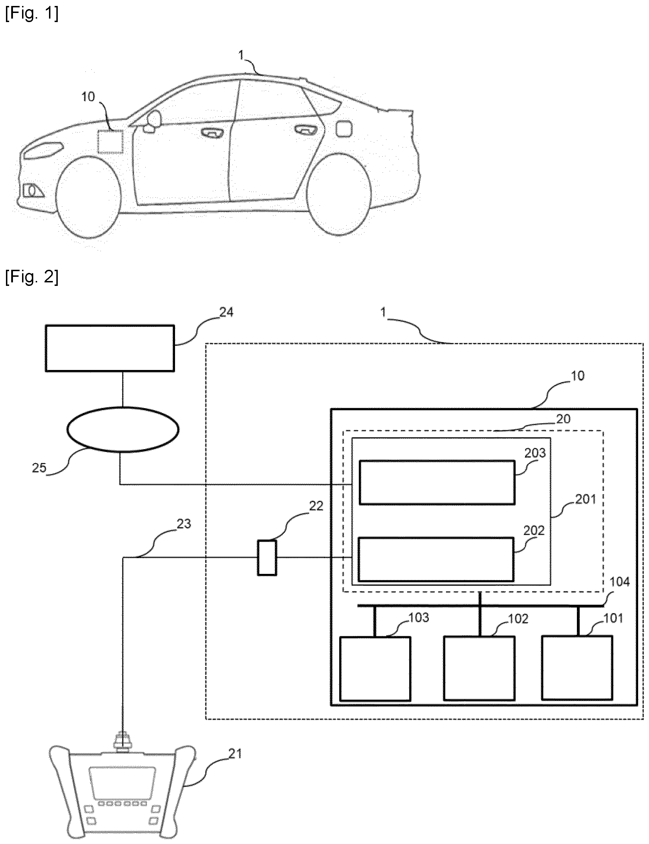

La figure 1 représente un véhicule automobile 1 comprenant différents composants fonctionnels (non représentés) dont la mise en oeuvre et/ou le contrôle dépendent de diverses unités de commande électroniques implantées dans le véhicule 1. Pour des raisons de clarté, une seule unité de commande électronique 10 est représentée à travers la figure 1.

Selon certains modes de réalisation, l'unité de commande électronique 10 peut être configurée pour contrôler le fonctionnement d'un composant dans le véhicule 1.

Selon certains modes de réalisation, un composant peut être choisi dans un groupe comprenant notamment un moteur, un groupe motopropulseur, les transmissions, les freins, les suspensions, les systèmes de divertissement embarqués, les systèmes de communication, les systèmes de carrosserie, les systèmes de châssis, le système de direction assistée, le système d'accélération, le système de verrouillage des portes, le système d'injection électronique de carburant, et le système de freinage antiblocage.

Selon certains modes de réalisation, l'unité de commande électronique 10 peut être configurée pour collecter et analyser des données de conduite qui peuvent être fournies aux compagnies d'assurance ou pour améliorer l'expérience de conduite ou pour fournir une assistance à la conduite avancée ou automatisée.

Selon certains modes de réalisation, l'unité de commande électronique 10 peut être configurée pour détecter les anomalies en elle-même et dans le composant qu'elle contrôle et pour stocker les données d'anomalie de fonctionnement du composant dans une unité de stockage (non illustrée à la figure 1).

Selon certains modes de réalisation, l'unité de commande électronique 10 peut être configurée avec des instructions logicielles pour la détection des défauts et la prévision des temps d'arrêt, le retour en arrière intégré vers les versions précédentes du logiciel de l'unité de commande électronique, et les mises à jour des services de diagnostic, entre autres opérations.

Selon certains modes de réalisation, l'unité de commande électronique 10 peut être choisie dans un groupe comprenant l'unité contrôlant le divertissement dans un véhicule ('In-Vehicle-Infotainment' en langage anglo-saxon), l'unité assurant la surveillance des vues autour d'un véhicule ('Around View Monitoring' en langage anglo-saxon), l'unité de contrôle du moteur, ou une unité de contrôle d'un véhicule hybride ou électrique ('Hybrid or Electrical Vehicle Controller' en langage anglo-saxon).

L'unité de commande électronique 10 peut être configurée pour stocker des données relatives à des paramètres de configuration qui permettent par exemple de personnaliser l'interface homme-machine du véhicule en fonction de son modèle, son pays destinataire, sa couleur, ainsi que d'autres options comme l'ajout d'une caméra de vision arrière.

Selon certains modes de réalisation, un paramètre de configuration peut être choisi dans un groupe comprenant par exemple un paramètre de la configuration de l'attache-remorque, un paramètre de la configuration du chargeur CD, un paramètre de la configuration de la caméra arrière, un paramètre de la configuration de l'alarme après-vente, un paramètre de la configuration de la couleur du véhicule, un paramètre de la configuration du régime moteur, un paramètre de la configuration de l'utilisation d'une pompe pas originellement prévue pour le véhicule mais compatible avec, et un paramètre de la configuration du bridage de la vitesse pour une flotte de véhicule.

En référence à la figure 2, les modes de réalisation de l'invention fournissent un dispositif 20 de contrôle d'une unité de commande électronique 10 d'un véhicule automobile 1, le dispositif 20 comprenant un module de mise à jour 201 configuré pour mettre à jour la configuration de l'unité de commande électronique 10, la configuration de l'unité de commande électronique 10 étant notamment définie par un ensemble de paramètres de configuration, au moins un paramètre de configuration étant associé à une valeur de paramètre, une taille de paramètre de configuration en nombre de bits, et une valeur de filtre.

Selon certains modes de réalisation, l'unité de commande électronique 10 peut comprendre une unité de stockage 101 configurée pour stocker les données de configuration de l'unité de commande électronique 10 comprenant les valeurs de paramètres et les valeurs de filtres associés aux paramètres de configuration manuels.

Selon certains modes de réalisation, l'unité de stockage 101 peut comprendre une ou plusieurs mémoires mortes et/ou une ou plusieurs mémoires vives.

Selon certains modes de réalisation, l'unité de commande électronique 10 peut en outre comprendre un processeur 102, un contrôleur de communication (non illustré sur la figure 2), et une interface d'entrée-sortie 103. Le processeur 102 peut être configuré pour effectuer les calculs basés sur des programmes de contrôle stockés dans la mémoire morte. La mémoire vive peut être configurée pour stocker temporairement les données résultantes calculées par le processeur. Le processeur 102, l'unité de stockage 101, et le contrôleur de communication peuvent être reliés entre eux et à l'interface d'entrée-sortie par un bus bidirectionnel 104.

Selon certains modes de réalisation, l'interface d'entrée-sortie 103 peut être connectée à un ou plusieurs capteurs, les données provenant des capteurs pouvant être sauvegardées dans l'unité de stockage 101.

Le module de mise à jour 201 selon l'invention permet de protéger les mises à jour des paramètres de configuration contre leur altération pendant le cycle de fonctionnement du véhicule 1. La protection des données de configuration selon l'invention se base sur l'implémentation de deux interfaces de mise à jour d'unités de commande électroniques qui sont programmables, comprenant une première interface de mise à jour accessible par les coordinateurs techniques et une deuxième interface de mise à jour accessible par le constructeur automobile, l'interface permettant ainsi d'identifier la source de la mise à jour. Plus précisément, en référence à la figure 2, le module de mise à jour 201 peut comprendre une première interface de mise à jour 202 programmable configurée pour mettre à jour la valeur de paramètre associée à au moins un paramètre de configuration en réponse à une commande de mise à jour reçue d'une première source 21 et pour mettre à jour le bouclier de configuration en lui ajoutant une référence audit au moins un paramètre de configuration en réponse à la mise à jour de la valeur de paramètre, l'ajout d'une référence au paramètre de configuration permet de mettre à jour la valeur de filtre associée audit paramètre.

Selon certains modes de réalisation, la première source 21 peut être un outil de diagnostic embarqué communiquant avec l'unité de commande électronique 20 via une connexion 23 câblée qui peut utiliser une prise de diagnostic 22 centralisée du véhicule 1 permettant d'avoir accès aux différentes unités de commande électroniques du véhicule 1.

Selon certains modes de réalisation, la prise de diagnostic 22 peut être configurée pour se connecter électroniquement à l'unité de commande électronique 10 par exemple via un médium de communication de type ligne bidirectionnelle série K ou via un réseau série bidirectionnel tel qu'un réseau CAN (acronyme de 'Controller Area Network' selon la terminologie anglo-saxonne).

Selon certains modes de réalisation, la première source 21 peut être configurée pour communiquer avec l'unité de commande électronique 10 via un réseau d'unités de commande électroniques ou via une unité de commande électronique de passerelle.

Selon certains modes de réalisation, la première source 21 peut être accessible par un coordinateur technique pour mettre à jour la valeur associée à au moins un paramètre de configuration et mettre à jour la valeur de filtre associée audit au moins un paramètre de configuration en réponse à ladite mise à jour à travers la première interface de mise à jour 202.

Pour distinguer le paramétrage réalisé par le constructeur automobile de celui opéré par un coordinateur technique, le module de mise à jour 201 peut en outre comprendre une deuxième interface de mise à jour 203 programmable configurée pour mettre à jour les valeurs de paramètres associées à au moins une partie de l'ensemble de paramètres de configuration en fonction des valeurs de filtres associées aux paramètres de configuration en réponse à une commande de mise à jour reçue d'une deuxième source 24, les valeurs de paramètres mises à jour peuvent résulter d'une étape d'initialisation opérée à l'usine et/ou résulter d'une étape de mise à jour précédente opérée par un coordinateur technique et/ou par le constructeur automobile.

Selon certains modes de réalisation, la deuxième source 24 peut être un serveur de mise à jour distant accessible par le constructeur automobile pour mettre à jour au moins une partie de l'ensemble de paramètres de configuration à travers la deuxième interface de mise à jour 203. La communication entre la deuxième source 24 et l'unité de commande électronique 10 peut être par exemple une communication à travers les airs ou via une clé USB, une communication à travers les airs désignant une communication par voie hertzienne mettant en œuvre une technique ou technologie de communication sans fil via un réseau de communication sans fil 25 (par exemple un réseau cellulaire, un réseau mobile ad-hoc tel qu'un réseau Bluetooth ou Wi-Fi, etc.).

Selon certains modes de réalisation, la première source 21 et la deuxième source 24 peuvent être configurées pour communiquer avec l'unité de commande électronique 10 en utilisant le protocole de diagnostic UDS. Le protocole UDS offre une pluralité de services comprenant la lecture et l'écriture de données sur l'unité de commande électronique 10, la reprogrammation de l'unité de commande électronique 10, l'activation de routines à distances, etc. La première source 21 et la deuxième source 24 peuvent ainsi être configurées pour contacter l'unité de commande électronique 10 installée dans le véhicule 1 et ayant les services UDS activés.

Un service UDS utilise les couches du modèle OSI (acronyme pour 'Open Systems Interconnection' en langage anglo-saxon). Les capacités de transmission de données d'une pile de protocole UDS permettent de lire ou d'écrire toute information vers ou depuis l'unité de commande électronique 10.

Un service du protocole UDS est associé à un identifiant de service désigné par SID (acronyme pour Service IDentifier' en langage anglo-saxon) et à des paramètres de service qui sont contenus dans les données d'une trame de message émise par l'outil de diagnostic embarqué (ou encore la première source 21) ou distant (ou encore la deuxième source 24). Les messages définis dans le protocole UDS peuvent être envoyés à l'unité de commande électronique 10 qui fournit les services prédéterminés.

Les services de la pile de protocole UDS comprennent un ensemble de services relatifs à la fonction de transmission de données (ou encore 'Data Transmission' en langage anglo-saxon) dont, par exemple, le service 'lecture de données par identifiant' (ou encore 'Read Data by Identifier' en langage anglo-saxon), le service 'lecture de la mémoire par adresse' (ou encore 'Read Memory by Address' en langage anglo-saxon), le service d'écriture de données par identifiant (ou encore 'Write Data By Identifier' en langage anglo-saxon), et le service d'écriture de mémoire par adresse (ou encore 'Write Memory By Address' en langage anglo-saxon).

Les données peuvent ainsi être lues ou écrites dans l'unité de commande électronique 10 (plus précisément dans l'unité de stockage 101) sur la base d'identificateur de données (aussi désignés par DID, acronyme de 'Data Identifier' en langage anglo-saxon) et d'identifiants périodiques, et peuvent être lues de la mémoire physique à une adresse spécifiée, ou encore écrites dans l'unité de commande électronique 10 (plus précisément dans l'unité de stockage 101) par identifiant et par adresse mémoire.

Les données lues et écrites de et dans l'unité de commande électronique 10 peuvent concerner des informations statiques comme le numéro de série de l'unité de commande électronique 10, l'état courant de capteur, le régime moteur, les paramètres de configuration, etc. En particulier, le service d'écriture permet de modifier les paramètres de configuration lors d'une mise à jour à l'initiative du constructeur automobile ou du coordinateur technique.

Les données de configuration peuvent être initialisées ou renseignées à l'usine lors de la fabrication du véhicule.

Selon certains modes de réalisation, l'initialisation des données de configuration (similairement des paramètres de configuration) peut être réalisée pour associer le modèle de véhicule choisi par le client aux différentes options proposées par le constructeur automobile (par exemple la motorisation, le limiteur de vitesse, le régulateur de vitesse, la boîte de vitesse). Le code applicatif présent au sein du premier espace mémoire peut être commun à tous les véhicules issus d'un même modèle ou varier en fonction des différentes options souscrites par le client.

L'initialisation de l'unité de contrôle électronique 10 peut être réalisée à l'usine lorsque le véhicule se trouve sur la chaîne de montage, lorsque le véhicule est assemblé, ou lorsque le véhicule est en cours d'assemblage.

Selon certains modes de réalisation, les valeurs de paramètres associées à l'ensemble de paramètres de configuration peuvent être initialisées à des valeurs initiales d'usine. En particulier, la deuxième source 24 peut être un outil de diagnostic (ou de mise à jour) accessible en usine (par exemple sur la chaîne de montage) par le constructeur automobile pour initialiser les valeurs de paramètres associées à au moins une partie de l'ensemble de paramètres de configuration à travers la deuxième interface de mise à jour 203.

En sortie d'usine, chaque paramètre de configuration de l'unité de contrôle électronique 220 peut être considéré comme automatique, la valeur de paramètre associée à chaque paramètre de configuration ayant été déterminée lors de l'initialisation en réponse à une commande d'initialisation émise par le constructeur automobile. Le bouclier de paramètre associé à chaque paramètre de configuration de l'unité de contrôle électronique est vide (ou encore associé à une valeur initiale ou par défaut) en sortie d'usine.

Selon les modes de réalisation de l'invention, le module de mise à jour 201 peut être configuré pour contrôler les mises à jour ultérieures des paramètres de configuration durant le fonctionnement du véhicule 1 en réponse à des commandes de mise à jour émises par le constructeur automobile et/ou un coordinateur technique, les commandes de mises à jour à l'initiative du constructeur automobile et du coordinateur technique pouvant avoir lieu dans des contextes différents et pour des fins différentes.

Selon certains modes de réalisation de l'invention, les paramètres de configuration définissant la configuration de l'unité de contrôle électronique 10 peuvent être mis à jour de manière ciblée en réponse à une commande de mise à jour émise par le coordinateur technique ou globale en réponse à une commande de mise à jour émise par le constructeur automobile, les paramètres mis à jour deviendront alors manuels. En d'autres termes, la première interface de mise à jour 202 peut être configurée pour mettre à jour un ou plusieurs paramètres à la fois en réponse à une commande de mise à jour émise par le coordinateur technique et reçue de la première source 21 accessible par le coordinateur technique.

La deuxième interface de mise à jour 203 peut être configurée pour mettre à jour au moins une partie de l'ensemble de paramètres de configuration définissant la configuration de l'unité de commande électronique 10 en réponse à une commande de mise à jour émise par le constructeur automobile et reçue de la deuxième source 24 accessible par le constructeur automobile.

Selon certains modes de réalisation, une mise à jour de la configuration de l'unité de contrôle électronique 10 peut être réalisée pour la souscription à une option, la dé-souscription d'une option, la correction d'erreurs. En particulier, une mise à jour de la configuration d'une unité de commande électronique 10 en réponse à l'initiative du constructeur automobile peut être réalisée à des fins de corrections d'erreurs ou d'amélioration de réglages. Une erreur peut être, par exemple, une erreur de réglage de paramètre, un dépassement de pile, un sous-débit de pile, ou un écart de fonctionnement normal ou attendu.

Par exemple, une mise à jour de la configuration de l'unité de commande électronique 10 à l'initiative du coordinateur technique peut avoir lieu suite à la demande du propriétaire du véhicule pour activer une nouvelle option comme par exemple l'attache caravane, la caméra de vision arrière ou l'alarme après-vente, pour repeindre le véhicule dans une nouvelle couleur nécessitant la mise à jour de paramètres de l'interface homme-machine afin de conserver une représentation du véhicule sur les écrans de l'habitacle conforme à son nouvel aspect extérieur, etc.

Selon certains modes de réalisation, la première interface de mise à jour 202 programmable peut être configurée pour la lecture de l'état du bouclier de configuration en réponse à une commande de lecture émise par le coordinateur technique et reçue de la première source 21. En particulier, la première interface de mise à jour 202 programmable peut être configurée pour la lecture de la valeur de filtre associée à un ou plusieurs paramètres de configuration en réponse à une commande de lecture émise par le coordinateur technique et reçue de la première interface 202. La première interface 202 permet ainsi une lecture locale ou globale des boucliers de paramètres.

Selon certains modes de réalisation, la première interface de mise à jour 202 peut être configurée pour modifier la valeur de filtre associée à un ou plusieurs paramètres de configuration en réponse à une commande de mise à jour émise par le coordinateur technique et reçue de la première source 21, ce qui permet de transformer un ou plusieurs paramètres automatiques ou manuels en un ou plusieurs paramètres manuels ou automatiques. Plus précisément, la modification de la valeur de filtre associée à un paramètre automatique permet de transformer ce paramètre en un paramètre manuel (ce qui revient à réaliser une opération d'ajout de bouclier de paramètre), et la modification de la valeur de filtre associée à un paramètre manuel permet de transformer ce paramètre en un paramètre automatique (ce qui revient à réaliser une opération de suppression de bouclier de paramètre ou encore la suppression de la valeur de filtre associée au paramètre de configuration).

Selon certains modes de réalisation, la première interface de mise à jour 202 peut être utilisée pour restaurer les valeurs initiales associées aux paramètres de configuration, les valeurs initiales correspondant aux valeurs d'usine initialisées lors de la fabrication du véhicule 1 par le constructeur automobile.

Selon certains modes de réalisation dans lesquels une mise à jour de l'unité de commande électronique 10 est réalisée pour la dé-souscription d'une option, le bouclier du paramètre associé au paramètre de configuration correspondant à la dé-souscription de l'option peut être retiré et la valeur associée au paramètre de configuration peut être remise à la valeur provenant du dossier de configuration du constructeur, à jour des éventuelles dernières corrections.

Selon certains modes de réalisation, la deuxième interface de mise à jour 203 peut être configurée pour mettre à jour, en réponse à une commande de mise à jour émise par le constructeur automobile et reçue de la deuxième source 24, les paramètres automatiques uniquement, c'est-à-dire les paramètres de configuration qui ne sont pas protégés par un bouclier de paramètre. En d'autres termes, lors d'une mise à jour des paramètres de configuration à l'initiative du constructeur automobile, les paramètres de configuration qui sont automatiques peuvent être mis à jour par les valeurs indiquées par le constructeur automobile dans la commande de mise à jour reçue de la deuxième source 24. En revanche, les paramètres de configuration qui sont manuels et qui ont été mis à jour précédemment par un coordinateur technique et qui sont donc protégés par le bouclier de configuration peuvent ne pas être modifiées.

Selon certains modes de réalisation, la deuxième interface de mise à jour 203 peut être configurée pour retransformer un paramètre manuel en un paramètre automatique en supprimant le bouclier de paramètre associé au paramètre manuel en réponse à une commande de mise à jour reçue de la deuxième source 24 et émise par le constructeur automobile. Avantageusement, la suppression de bouclier de paramètre permet au constructeur automobile de reprendre le contrôle de la mise à jour de l'unité de commande électronique 10. La possibilité de suppression de bouclier offerte au constructeur automobile à travers la deuxième interface 203 peut s'avérer nécessaire dans des situations comprenant la correction d'erreurs par le constructeur automobile.

Selon certains modes de réalisation, la deuxième interface de mise à jour 24 peut être configurée pour mettre à jour l'ensemble de paramètres de configuration en réponse à une commande de mise à jour globale émise par le constructeur automobile et reçue par la deuxième source 24 en contournant les boucliers de paramètres associés aux paramètres manuels parmi l'ensemble de paramètres de configuration. En d'autres termes, la deuxième interface de mise à jour 24 peut permettre au constructeur automobile, à travers la deuxième source 24, de modifier les valeurs associées à l'ensemble de paramètres de configuration qu'ils soient manuels ou automatiques, protégés ou pas par un bouclier de paramètre. La possibilité de contourner le bouclier de configuration permet d'éviter le risque d'erreur nécessitant le rapatriement des véhicules aux constructeurs.

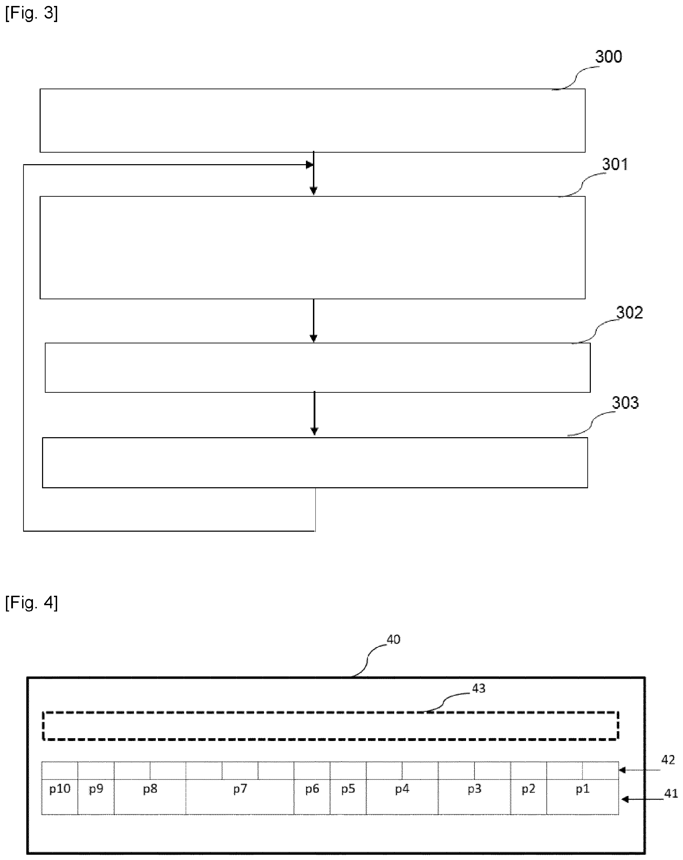

En référence à la figure 3, les modes de réalisation de l'invention fournissent en outre un procédé de contrôle d'une unité de commande électronique 10 d'un véhicule automobile 1, le procédé comprenant la mise à jour de la configuration de l'unité de commande électronique 10, la configuration étant définie par un ensemble de paramètres de configuration, au moins un paramètre de configuration étant associé à une valeur de paramètre et à une valeur de filtre.

L'étape 300 d'initialisation peut comprendre l'initialisation des valeurs de paramètres associées à l'ensemble de paramètres de configuration L'étape 300 d'initialisation peut être réalisée par le constructeur automobile en utilisant la première source 21. Lors de l'étape d'initialisation, tous les paramètres sont automatiques et les boucliers de paramètres associés à l'ensemble de paramètres de configuration sont initialisés à des valeurs désignant des boucliers vides.

L'étape 301 de mise à jour par la première source peut comprendre la mise à jour, à travers une première interface de mise à jour, de la valeur de paramètre associée à au moins un paramètre de configuration en réponse à une commande de mise à jour reçue de la première source 21 et émise par un coordinateur technique.

L'étape 302 de mise à jour du filtre peut comprendre la mise à jour, à travers la première interface de mise à jour, de la valeur de filtre associée à l'au moins un paramètre de configuration en réponse à la mise à jour de la valeur de paramètre associée audit au moins un paramètre de configuration. Lors de la mise à jour de la valeur de filtre associée au paramètre de configuration dont la valeur de paramètre a été modifiée, ce paramètre se transforme d'un paramètre automatique en paramètre manuel et devient protégé par le filtre de paramètre.

L'étape 303 de mise à jour par la deuxième source peut comprendre la mise à jour des valeurs de paramètres associées à au moins une partie de l'ensemble de paramètres de configuration en fonction des valeurs de filtres associées à l'ensemble de paramètres de configuration, en réponse à une commande de mise à jour reçue d'une deuxième source 24 et émise par le constructeur automobile. L'étape 303 peut être suivie de l'étape 301, les valeurs associées aux paramètres mis à jour lors de l'étape 301 pouvant résulter de l'étape d'initialisation 300 ou de l'étape 303 de mise à jour par la deuxième source.

Selon certains modes de réalisation, à l'étape 303, les valeurs de paramètres associées à l'ensemble de paramètres de configuration peuvent être mises à jour, en réponse à une commande de mise à jour émise par le constructeur automobile et reçue de la deuxième source 24, de manière à ce que seulement les paramètres automatiques soient mis à jour. En d'autres termes, les paramètres de configuration qui sont automatiques peuvent être mis à jour à l'étape 303 par les valeurs indiquées par le constructeur automobile dans la commande de mise à jour reçue de la deuxième source 24. En revanche, les paramètres de configuration qui sont manuels et qui ont été mis à jour précédemment par un coordinateur technique et sont donc protégés par le bouclier de configuration peuvent ne pas être modifiées à l'étape 303.

Selon certains modes de réalisation, à l'étape 303, les valeurs de paramètres associées à l'ensemble de paramètres de configuration peuvent être mises à jour, en réponse à une commande de mise à jour émise par le constructeur automobile et reçue de la deuxième source 24, de manière à ce que les boucliers de paramètres associés aux paramètres manuels sont supprimés pour retransformer les paramètres manuel en paramètres automatiques. La commande de suppression du bouclier peut concerner ici un sous-ensemble des paramètres manuels.

Selon certains modes de réalisation, à l'étape 303, les valeurs de paramètres associées à l'ensemble de paramètres de configuration peuvent être mises à jour, en réponse à une commande de mise à jour émise par le constructeur automobile et reçue de la deuxième source 24, de manière à ce que les boucliers de paramètres associés aux paramètres manuels parmi l'ensemble de paramètres de configuration sont contournés, ce qui n'empêche pas une mise à jour des valeurs de paramètres associées aux paramètres manuels en réponse à une commande de mise à jour émise par le constructeur automobile et reçue de la deuxième source 203. Le contournement de bouclier peut concerner ici l'ensemble des paramètres manuels.

Les figures 4 à 10 illustrent, par des diagrammes de séquences et des structures en blocs les étapes du procédé de contrôle d'une unité de commande électronique 10 selon certains modes de réalisation de l'invention dans lequel l'unité de commande électronique est l'unité contrôlant le divertissement dans un véhicule automobile, la configuration est définie par dix paramètres dénotés p1 à p10 comprenant de un à trois bits, et la première source 21 et la deuxième source 24 utilisent le protocole UDS.

La figure 4 est un schéma représentant un exemple de la structure de l'ensemble de paramètres p1 à p10 et du bouclier de configuration 43. Le bouclier de configuration 43 contient les identifiants de configuration auxquels appartiennent les paramètres p1 à p10, les positions des paramètres dans leurs identifiants de configuration (désigné par DID de configuration), et leur taille en nombre de bits 42 (ici de un à trois bits). Le bouclier de configuration 43 est programmable à travers la première interface de mise à jour accessible par le coordinateur technique via la première source 21 et à travers la deuxième interface de mise à jour accessible par le constructeur automobile via la seconde source 24. A la figure 4, les boucliers de paramètres sont vides et les valeurs associées aux paramètres sont associées à des valeurs initiales (prédéfinies ou valeurs par défaut).

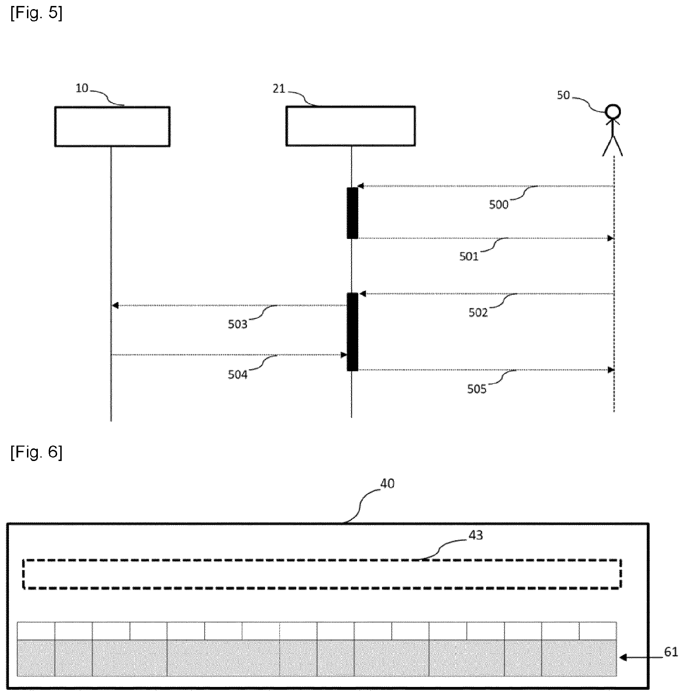

La figure 5 représente un exemple de diagramme de séquence illustrant l'initialisation de l'ensemble de paramètres de configuration p1 à p10 par le constructeur automobile 50, selon certains modes de réalisation de l'invention dans lesquels l'initialisation des valeurs de paramètres associées à l'ensemble de paramètres p1 à p10 utilise le service d'écriture de données par identifiant.

A l'étape 500, le constructeur automobile 50 peut émettre une requête à la première source 21 pour charger la configuration en indiquant l'identifiant de configuration 'DID=0x2003' et les données initiales qui sont les données d'usine.

A l'étape 501, la première source 21 peut être configurée pour acquitter le chargement de la configuration suite à la requête 500.

A l'étape 502, le constructeur automobile peut émettre une requête à la première source pour envoyer la configuration chargée lors de l'étape 500 à l'unité de commande électronique 10 pour effectuer l'initialisation des paramètres de configuration, en indiquant l'identifiant de configuration 'DID=0x2003'.

A l'étape 503, une commande d'écriture de données par identifiant 'Ecrire Données par Identifiant DID=0x2003 Données=Données d'usine' peut être reçue par l'unité de contrôle électronique 10 à travers la première interface de mise à jour 202 de la première source 21 accessible par le constructeur automobile lors de l'étape d'initialisation à l'usine. Les étapes 504 et 505 peuvent être effectuées pour indiquer que l'opération d'initialisation de l'ensemble de paramètres de configuration a été finalisée.

La figure 6 est un schéma représentant la structure de l'ensemble de paramètres de configuration p1 à p10 et du bouclier de configuration après l'étape d'initialisation correspondant à la figure 5. Comme illustré par la figure 6, les valeurs de paramètres associées à l'ensemble de paramètres sont modifiées et correspondent aux valeurs initiales d'usine 61. L'état du bouclier de configuration n'a pas été modifié, tous les paramètres p1 à p10 sont considérés comme automatiques et les boucliers qui leurs sont associés sont vides (ou encore associés à des valeurs initiales).

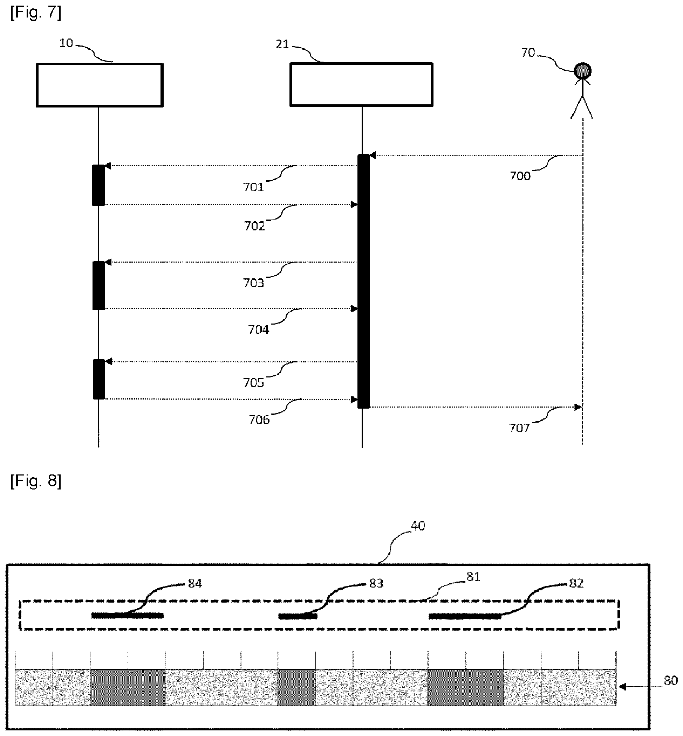

La figure 7 représente un exemple de diagramme de séquence illustrant la mise à jour de la configuration de l'unité de commande électronique 10 par un coordinateur technique 70 à travers la première source 21 et la première interface de mise à jour (non illustrée sur la figure 7), selon certains modes de réalisation relatifs à l'installation d'une nouvelle option qui requiert la mise à jour des paramètres p3, p6, et p8.

A l'étape 700, le coordinateur technique 70 peut émettre une requête à la première source 21 pour installer une nouvelle option.

A l'étape 701, la première source 21 peut être configurée pour émettre une commande d'ouverture de session à l'unité de commande électronique 10 qui peut être configurée à acquitter la réception de la commande à l'étape 702.

A l'étape 703, l'unité de commande électronique 10 peut être configurée pour recevoir une commande de lecture de données par identifiant à l'identifiant 'DID=0x2003' de la première source 21 et acquitter la lecture des données par identifiant à l'étape 704.

A l'étape 705, la première source 21 peut être configurée pour mettre à jour les paramètres p3, p6, et p8 en envoyant une commande d'écriture de données par identifiant à l'unité de commande électronique 10 via la première interface de mise à jour 202. Les étapes 706 et 707 peuvent être réalisées pour indiquer, à la première source et au coordinateur technique que la commande d'écriture de données a été exécutée et les paramètres ont été mis à jour pour l'installation de la nouvelle option.

La figure 8 est un schéma représentant la structure de l'ensemble de paramètres de configuration p1 à p10 et le bouclier de configuration 81 après l'étape de mise à jour pour l'installation d'une nouvelle option correspondant à la figure 7. Comme illustré à la figure 8, les valeurs de paramètres associées aux paramètres p3, p6, et p8 sont modifiées et correspondent aux valeurs 80 mises à jour par le coordinateur technique. L'état des boucliers associés à ces paramètres a été modifié en réponse à la mise à jour des valeurs de paramètres associées à ces paramètres par le coordinateur technique. Les paramètres p3, p6, et p8 deviennent des paramètres manuels protégés respectivement par le bouclier de paramètre 82, 83, et 84. L'état du bouclier de paramètre associé à chacun des autres paramètres p1, p2, p4, p5, p7, p9, et p10 n'a pas changé, ces paramètres sont restés des paramètres automatiques.

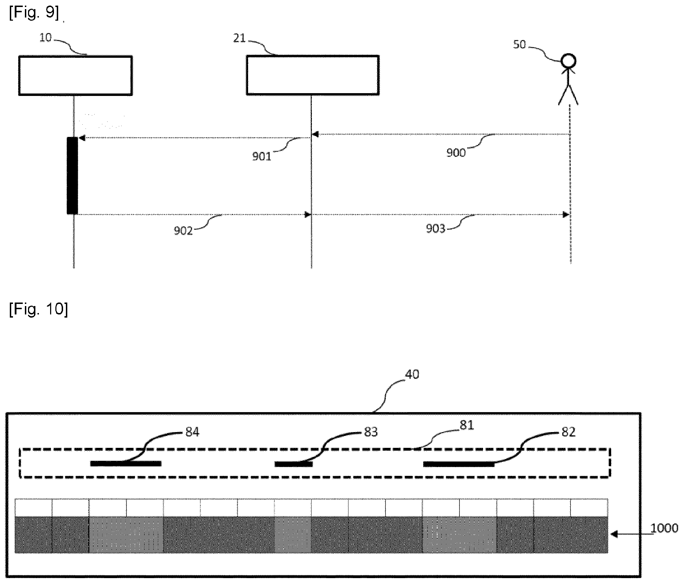

La figure 9 représente un exemple de diagramme de séquence illustrant la mise à jour de la configuration de l'unité de commande électronique 10 par le constructeur automobile 50 à travers la deuxième source 24 et la deuxième interface de mise à jour (non illustrée sur la figure 9), la mise à jour de l'unité de commande électronique 10 consistant à mettre à jour l'ensemble de paramètres de configuration p1 à p10.

Aux étapes 900 et 901, le constructeur automobile 50 peut émettre à l'unité de commande électronique 10 via la deuxième source 24, une requête de mise à jour de la configuration en indiquant l'identifiant de configuration 'DID=0x2003' et des données égales à des données de mise à jour. Cette requête peut être reçue par la deuxième interface de mise à jour (non illustrée dans la figure 9). L'exécution de la mise à jour peut être acquittée par l'ECU 10 à la deuxième source 24 et au constructeur automobile, respectivement aux étapes 902 et 903.

La figure 10 est un schéma représentant la structure de l'ensemble de paramètres de configuration p1 à p10 et le bouclier de configuration après l'étape de mise à jour de la configuration à l'initiative du constructeur automobile correspondant au diagramme de séquence représenté à la figure 9. Comme illustré à la figure 10, les valeurs de paramètres associées aux paramètres p3, p6, et p8 n'ont pas été modifiées et correspondent aux valeurs 80 mises à jour précédemment par le coordinateur technique. Seulement les paramètres automatiques p1, p2, p4, p5, p7, p9, et p10 ont été mis à jour aux valeurs de mise à jour 1000 en réponse à la commande émise par le constructeur automobile.

L'invention n'est pas limitée aux modes de réalisation décrits ci-avant à titre d'exemple non limitatif. Elle englobe toutes les variantes de réalisation qui pourront être envisagées par l'homme du métier.

En général les routines exécutées pour mettre en œuvre les modes de réalisation de l'invention, qu'elles soient mises en œuvre dans le cadre d'un système d'exploitation ou d'une application spécifique, d'un composant, d'un programme, d'un objet, d'un module ou d'une séquence d'instructions, ou même d'un sous-ensemble de ceux-là, peuvent être désignées comme "code de programme informatique" ou simplement "code de programme". Le code de programme comprend typiquement des instructions lisibles par ordinateur qui résident à divers moments dans des dispositifs divers de mémoire et de stockage dans un ordinateur et qui, lorsqu'elles sont lues et exécutées par un ou plusieurs processeurs dans un ordinateur, amènent l'ordinateur à effectuer les opérations nécessaires pour exécuter les opérations et/ou les éléments propres aux aspects variés des modes de réalisation de l'invention. Les instructions d'un programme, lisibles par ordinateur, pour réaliser les opérations des modes de réalisation de l'invention peuvent être, par exemple, le langage d'assemblage, ou encore un code source ou un code objet écrit en combinaison avec un ou plusieurs langages de programmation.

## Revendications

1. Dispositif (20) de contrôle d'une unité de commande électronique (10) d'un véhicule automobile (1), comprenant un module de mise à jour (201) de la configuration de ladite unité de commande électronique (10), ladite configuration étant définie par un ensemble de paramètres de configuration, au moins un paramètre de configuration étant associé à une valeur de paramètre et à une valeur de filtre, chaque valeur de filtre étant initialisée à une valeur désignant un filtre vide et chaque paramètre de configuration étant initialisé comme paramètre automatique, le module de mise à jour (201) comprenant :
- une première interface de mise à jour (202) programmable, la première interface de mise à jour (202) étant configurée pour mettre à jour la valeur de paramètre associée à au moins un paramètre de configuration en réponse à une commande de mise à jour reçue d'une première source (21) et pour mettre à jour la valeur de filtre associée audit au moins un paramètre de configuration pour transformer ledit paramètre de configuration en paramètre manuel en réponse à la mise à jour de ladite valeur,
- une deuxième interface de mise à jour (203) programmable, la deuxième interface de mise à jour (203) étant configurée pour mettre à jour les valeurs de paramètres automatiques associées à au moins une partie de l'ensemble de paramètres de configuration en réponse à une commande de mise à jour reçue d'une deuxième source (24).

2. Dispositif selon la revendication 1, **caractérisé en ce que** les valeurs de paramètres associées audit ensemble de paramètres de configuration sont initialisées à des valeurs initiales d'usine et/ou résultent d'une mise à jour précédente.

3. Dispositif selon l'une quelconque des revendications précédentes, **caractérisé en ce que** ladite deuxième interface de mise à jour (203) est configurée pour mettre à jour, en réponse à une commande de mise à jour reçue de ladite deuxième source (24), l'ensemble de paramètres de configuration définissant ladite configuration.

4. Dispositif selon l'une quelconque des revendications précédentes, **caractérisé en ce que** ladite première interface de mise à jour (202) est configurée pour la lecture de la valeur de filtre associée à un ou plusieurs paramètres de configuration.

5. Dispositif selon l'une quelconque des revendications précédentes, **caractérisé en ce qu'**un paramètre automatique est un paramètre de configuration associé à une valeur de paramètre mise à jour en réponse à une commande de mise à jour reçue de ladite deuxième source (24), et un paramètre manuel est un paramètre de configuration associé à une valeur de paramètre mise à jour en réponse à une commande de mise à jour reçue de ladite première source (21).

6. Dispositif selon l'une quelconque des revendications précédentes, **caractérisé en ce que** ladite deuxième interface de mise à jour (203) est configurée pour la suppression de la valeur de filtre associée à un paramètre de configuration manuel donné pour transformer ledit paramètre de configuration en paramètre automatique.

7. Dispositif selon l'une quelconque des revendications précédentes, **caractérisé en ce que** ladite première source (21) est un outil de diagnostic accessible par le constructeur automobile pour initialiser les valeurs de paramètres associées à l'ensemble de paramètres de configuration, ledit outil de diagnostic étant accessible par un coordinateur technique pour mettre à jour la valeur associée à au moins un paramètre de configuration et mettre à jour la valeur de filtre associée audit au moins un paramètre de configuration en réponse à ladite mise à jour à travers ladite première interface de mise à jour (202).

8. Dispositif selon l'une quelconque des revendications précédents, **caractérisé en ce que** ladite deuxième source (24) est un serveur de mise à jour distant accessible par le constructeur automobile pour mettre à jour au moins une partie de l'ensemble des paramètres de configuration.

9. Procédé de contrôle d'une unité de commande électronique d'un véhicule automobile comprenant la mise à jour de la configuration de ladite unité de commande électronique, ladite configuration étant définie par un ensemble de paramètres de configuration, au moins un paramètre de configuration étant associé à une valeur de paramètre et à une valeur de filtre, chaque valeur de filtre étant initialisée à une valeur désignant un filtre vide et chaque paramètre de configuration étant initialisé comme paramètre automatique, le procédé comprenant les étapes consistant à :
- initialiser (300) les valeurs de paramètres associées audit ensemble de paramètres de configuration à des valeurs initiales d'usine;
- mettre à jour (301), à travers une première interface de mise à jour programmable, la valeur de paramètre associée à au moins un paramètre de configuration en réponse à une commande de mise à jour reçue d'une première source ;
- mettre à jour (302), à travers ladite première interface de mise à jour programmable, la valeur de filtre associée audit au moins un paramètre de configuration en réponse à la mise à jour de ladite valeur de paramètre associée à au moins un paramètre de configuration pour transformer ledit paramètre de configuration en paramètre manuel ;
- mettre à jour (303) les valeurs de paramètres automatiques associées à au moins une partie de l'ensemble des paramètres de configuration, en réponse à une commande de mise à jour reçue d'une deuxième source.

## Patentansprüche

1. Vorrichtung (20) zur Verwaltung eines elektronischen Steuergeräts (10) eines Kraftfahrzeugs (1), die ein Modul zur Aktualisierung (201) der Konfiguration des elektronischen Steuergeräts (10) beinhaltet, wobei die Konfiguration durch einen Satz Konfigurationsparameter definiert wird, wobei mindestens ein Konfigurationsparameter mit einem Parameterwert und einem Filterwert assoziiert ist, wobei jeder Filterwert auf einen Wert initialisiert ist, der einen leeren Filter bezeichnet, und jeder Konfigurationsparameter als automatischer Parameter initialisiert ist, wobei das Aktualisierungsmodul (201) Folgendes beinhaltet:
- eine erste programmierbare Aktualisierungsschnittstelle (202), wobei die erste Aktualisierungsschnittstelle (202) dazu konfiguriert ist, den Parameterwert, der mit mindestens einem Konfigurationsparameter assoziiert ist, als Reaktion auf einen Aktualisierungsbefehl, der von einer ersten Quelle (21) empfangen wird, zu aktualisieren und den Filterwert, der mit dem mindestens einen Konfigurationsparameter assoziiert ist, zu aktualisieren, um den Konfigurationsparameter als Reaktion auf die Aktualisierung des Werts in einen manuellen Parameter umzuwandeln;
- eine zweite programmierbare Aktualisierungsschnittstelle (203), wobei die zweite Aktualisierungsschnittstelle (203) dazu konfiguriert ist, die Werte von automatischen Parametern, die mit mindestens einem Teil des Satzes Konfigurationsparameter assoziiert sind, als Reaktion auf einen Aktualisierungsbefehl, der von einer zweiten Quelle (24) empfangen wird, zu aktualisieren.

2. Vorrichtung nach Anspruch 1, **dadurch gekennzeichnet, dass** die Parameterwerte, die mit dem Satz Konfigurationsparameter assoziiert sind, auf anfängliche Fabrikwerte initialisiert sind und/oder sich aus einer vorhergehenden Aktualisierung ergeben.

3. Vorrichtung nach einem der vorhergehenden Ansprüche, **dadurch gekennzeichnet, dass** die zweite Aktualisierungsschnittstelle (203) dazu konfiguriert ist, als Reaktion auf einen Aktualisierungsbefehl, der von der zweiten Quelle (24) empfangen wird, den Satz Konfigurationsparameter, der die Konfiguration definiert, zu aktualisieren.

4. Vorrichtung nach einem der vorhergehenden Ansprüche, **dadurch gekennzeichnet, dass** die erste Aktualisierungsschnittstelle (202) dazu konfiguriert ist, den Filterwert, der mit einem oder mehreren Konfigurationsparametern assoziiert ist, zu lesen.

5. Vorrichtung nach einem der vorhergehenden Ansprüche, **dadurch gekennzeichnet, dass** ein automatischer Parameter ein Konfigurationsparameter ist, der mit einem Parameterwert assoziiert ist, der als Reaktion auf einen von der zweiten Quelle (24) empfangenen Aktualisierungsbefehl aktualisiert wurde, und ein manueller Parameter ein Konfigurationsparameter ist, der mit einem Parameterwert assoziiert ist, der als Reaktion auf einen von der ersten Quelle (21) empfangenen Aktualisierungsbefehl aktualisiert wurde.

6. Vorrichtung nach einem der vorhergehenden Ansprüche, **dadurch gekennzeichnet, dass** die zweite Aktualisierungsschnittstelle (203) dazu konfiguriert ist, den Filterwert, der mit einem gegebenen manuellen Konfigurationsparameter assoziiert ist, zu löschen, um den Konfigurationsparameter in einen automatischen Parameter umzuwandeln.

7. Vorrichtung nach einem der vorhergehenden Ansprüche, **dadurch gekennzeichnet, dass** die erste Quelle (21) ein Diagnosewerkzeug ist, auf das der Automobilhersteller zugreifen kann, um die Parameterwerte, die mit dem Satz Konfigurationsparameter assoziiert sind, zu initialisieren, wobei ein technischer Koordinator auf das Diagnosewerkzeug zugreifen kann, um mittels der ersten Aktualisierungsschnittstelle (202) den Wert, der mit mindestens einem Konfigurationsparameter assoziiert ist, zu aktualisieren und als Reaktion auf die Aktualisierung den Filterwert, der mit dem mindestens einen Konfigurationsparameter assoziiert ist, zu aktualisieren.

8. Vorrichtung nach einem der vorhergehenden Ansprüche, **dadurch gekennzeichnet, dass** die zweite Quelle (24) ein entfernter Aktualisierungsserver ist, auf den der Automobilhersteller zugreifen kann, um mindestens einen Teil des Satzes der Konfigurationsparameter zu aktualisieren.

9. Verfahren zur Verwaltung eines elektronischen Steuergeräts eines Kraftfahrzeugs, das die Aktualisierung der Konfiguration des elektronischen Steuergeräts beinhaltet, wobei die Konfiguration durch einen Satz Konfigurationsparameter definiert wird, wobei mindestens ein Konfigurationsparameter mit einem Parameterwert und einem Filterwert assoziiert ist, wobei jeder Filterwert auf einen Wert initialisiert ist, der einen leeren Filter bezeichnet, und jeder Konfigurationsparameter als automatischer Parameter initialisiert ist, wobei das Verfahren die Schritte beinhaltet, die aus Folgendem bestehen:
- Initialisieren (300) der Parameterwerte, die mit dem Satz Konfigurationsparameter assoziiert sind, auf anfängliche Fabrikwerte;
- Aktualisieren (301), mittels einer ersten programmierbaren Aktualisierungsschnittstelle, des Parameterwerts, der mit mindestens einem Konfigurationsparameter assoziiert ist, als Reaktion auf einen Aktualisierungsbefehl, der von einer ersten Quelle empfangen wird;
- Aktualisieren (302), mittels der ersten programmierbaren Aktualisierungsschnittstelle, des Filterwerts, der mit dem mindestens einen Konfigurationsparameter assoziiert ist, als Reaktion auf die Aktualisierung des Parameterwerts, der mit mindestens einem Konfigurationswert assoziiert ist, um den Konfigurationsparameter in einen manuellen Parameter umzuwandeln;
- Aktualisieren (303) der Werte von automatischen Parametern, die mit mindestens einem Teil des Satzes der Konfigurationsparameter assoziiert sind, als Reaktion auf einen Aktualisierungsbefehl, der von einer zweiten Quelle empfangen wird.

## Claims

1. Device (20) for controlling an electronic control unit (10) of a motor vehicle (1), comprising a module (201) for updating the configuration of said electronic control unit (10), said configuration being defined by a set of configuration parameters, at least one configuration parameter being associated with a parameter value and with a filter value, each filter value being initialized at a value designating an empty filter and each configuration parameter being initialized as an automatic parameter, the updating module (201) comprising:
- a first programmable update interface (202), the first update interface (202) being configured to update the parameter value associated with at least one configuration parameter in response to an update command received from a first source (21) and to update the filter value associated with said at least one configuration parameter so as to convert said configuration parameter into a manual parameter in response to the update of said value;
- a second programmable update interface (203), the second update interface (203) being configured to update the automatic-parameter values associated with at least some of the set of configuration parameters in response to an update command received from a second source (24).

2. Device according to Claim 1, **characterized in that** the parameter values associated with said set of configuration parameters are initialized at initial factory values and/or result from a preceding update.

3. Device according to any one of the preceding claims, **characterized in that** said second update interface (203) is configured to update, in response to an update command received from said second source (24), the set of configuration parameters defining said configuration.

4. Device according to any one of the preceding claims, **characterized in that** said first update interface (202) is configured to read the filter value associated with one or more configuration parameters.

5. Device according to any one of the preceding claims, **characterized in that** an automatic parameter is a configuration parameter associated with a parameter value updated in response to an update command received from said second source (24), and a manual parameter is a configuration parameter associated with a parameter value updated in response to an update command received from said first source (21).

6. Device according to any one of the preceding claims, **characterized in that** said second update interface (203) is configured to remove the filter value associated with a given manual configuration parameter so as to convert said configuration parameter into an automatic parameter.

7. Device according to any one of the preceding claims, **characterized in that** said first source (21) is a diagnostic tool accessible by the motor-vehicle manufacturer with a view to initializing the parameter values associated with the set of configuration parameters, said diagnostic tool being accessible by a technical coordinator with a view to updating the value associated with at least one configuration parameter and to updating the filter value associated with said at least one configuration parameter in response to said update through said first update interface (202).

8. Device according to any one of the preceding claims, **characterized in that** said second source (24) is a remote updating server accessible by the motor-vehicle manufacturer with a view to updating at least some of the set of configuration parameters.

9. Method for controlling an electronic control unit of a motor vehicle, comprising updating the configuration of said electronic control unit, said configuration being defined by a set of configuration parameters, at least one configuration parameter being associated with a parameter value and with a filter value, each filter value being initialized at a value designating an empty filter and each configuration parameter being initialized as an automatic parameter, the method comprising steps of:
- initializing (300) the parameter values associated with said set of configuration parameters to initial factory values;
- updating (301), through a first programmable update interface, the parameter value associated with at least one configuration parameter in response to an update command received from a first source;
- updating (302), through said first programmable update interface, the filter value associated with said at least one configuration parameter in response to the update of said parameter value associated with at least one configuration parameter so as to convert said configuration parameter into a manual parameter;
- updating (303) the automatic-parameter values associated with at least some of the set of configuration parameters, in response to an update command received from a second source.
